# EUROPEAN PATENT APPLICATION

(11) **EP 3 133 895 A1**
(43) Date of publication of application: **22.02.2017**
(21) Application number: 15780035.0
(22) Date of filing: 10.04.2015
(51) Int. Cl.: H04W 88/08, H04W 24/00, H04W 88/12, H04W 88/18, H04W 92/14

(54) **COMMUNICATION APPARATUS, COMMUNICATION METHOD, AND STORAGE MEDIUM**

(30) Priority: 14.04.2014 JP 2014082691
(71) Applicant: NEC Corporation, Tokyo 108-8001 (JP)
(72) Inventor: KOGAMI, Masayo, Tokyo 108-8001 (JP)
(74) Representative: MacDougall, Alan John Shaw
(86) International application number: PCT/JP2015/002024
(87) International publication number: WO 2015/159527

(57) **Abstract**

In order to reduce the time required to set up a base station or required to update software, a communication apparatus (10) comprises: a plurality of antenna units (11a-11e) for communicating with mobile station apparatuses; a base station unit (12) that functions as a plurality of virtual base stations for communicating with the mobile station apparatuses by use of the antenna units (11a-11e); and a virtual management server unit (15) that functions as a logical server for managing the plurality of virtual base stations.

## Description

### [TECHNICAL FIELD]

This disclosure relates to a communication apparatus, a communication method and a storage medium.

### [BACKGROUND ART]

In a wireless communication network system like an LTE (LONG TERM EVOLUTION) system, there is a case where an EMS (ELEMENT MANAGEMENT SYSTEM) that manages establishment, operation and maintenance of each element such as a base station constituting a system in an integrated manner is used.

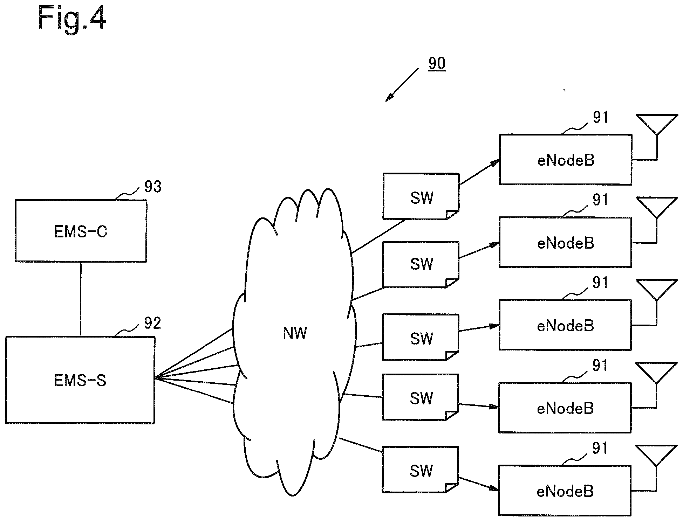

FIG. 4 is a diagram showing a structure of an LTE system 90 that is a related technology of the present invention. This LTE system 90 manages a plurality of base stations by an EMS. Specifically, the LTE system 90 has a plurality of eNodeBs 91 as a base station, and each eNodeB 91 is managed by the EMS. The EMS includes an EMS server 92 which manages the plurality of eNodeBs 91 in a lump and an EMS client 93 that operates the EMS server 92 by remote control. Each eNodeB 91 is coupled to the EMS server 92 via a network.

In this LTE system 90, in a case of establishing a new eNodeB 91, the eNodeB 91 comes to be a management target device of the EMS by being coupled to the network and software SW (SOFTWARE) being downloaded into the eNodeB 91 from the EMS server 92. When the software SW is updated, the software SW is downloaded to each eNodeB from the EMS server 92 via the network.

In recent years, a virtualization technology is becoming to be used widely, and the virtualization technology may be used also in the field of the wireless communication. For example, in patent literature 1, there is disclosed a technology to form a plurality of virtual wireless networks by one physical wireless base station. Further, in patent literature 2, there is disclosed a technology to form a plurality of virtual APs (ACCESS POINTs) in one physical AP. In these technologies, on the occasion of adding a device, the functions of a plurality of devices can be realized logically only by changing setting, and space needed for installing hardware is reduced and labor needed for operation of a system can be reduced without needing to install a new hardware.

### [CITATION LIST]

### [PATENT LITERATURE]

[PTL 1] Japanese Patent Application Laid-Open No. 2005-020626
[PTL 2] Japanese Patent Application Laid-Open No. 2007-266942

### [SUMMARY OF INVENTION]

### [TECHNICAL PROBLEM]

However, as shown in FIG. 4, when the virtualization technologies of patent literatures 1 and 2 are applied to a system that manages a plurality of base stations by an EMS to realize a plurality of base stations virtually, an EMS server is coupled to each of the plurality of virtual base stations via a network. Accordingly, when new establishment of a virtual base station or update of software is carried out, information required for the new establishment of the base station or the update of the software will be sent to each of the virtual base stations separately via the network. For this reason, there is a problem that a time needed for download of software becomes long in a case where a band of the network is not being reserved sufficiently or a case where the file size of the software is large.

One object of an exemplary embodiment is to provide a communication apparatus capable of reducing a time needed for new establishment of a base station and update of software. Meanwhile, it should be noted that this object is only one of a plurality of objects that embodiments disclosed in this description is trying to achieve. The other objects or problems to be solved and new features are clarified from the statements of this description or the accompanying drawings.

### [SOLUTION TO PROBLEM]

A communication apparatus according to an exemplary embodiment includes: a plurality of antenna units configured to communicate with a mobile station apparatus; a base station unit configured to function as a plurality of virtual base stations configured to communicate with the mobile station apparatus using each of the antenna units; and a virtual management server unit configured to function as a logical server configured to manage the plurality of virtual base stations.

A communication method according to another exemplary embodiment includes: making a communication apparatus including a plurality of antenna units to communicate with a mobile station apparatus function as a plurality of virtual base stations configured to communicate with the mobile station apparatus using each of the antenna units; and making the communication apparatus function as a logical server configured to manage the plurality of virtual base stations.

A storage medium according to another exemplary embodiment stores a program that makes a computer including a plurality of antenna units configured to communicate with a mobile station apparatus function as a base station unit configured to function as a plurality of virtual base stations configured to communicate with the mobile station apparatus using each of the antenna units, and a virtual management server unit configured to function as a logical server configured to manage the plurality of virtual base stations.

### [ADVANTAGEOUS EFFECT OF INVENTION]

According to an exemplary embodiment, a time needed for new establishment of a base station and update of software can be reduced.

### [BRIEF DESCRIPTION OF DRAWINGS]

[FIG. 1] FIG. 1 is a block diagram showing a structure of a communication apparatus 10 according to an exemplary embodiment.
[FIG. 2] FIG. 2 is a diagram for describing operations to add a virtual base station in the communication device 10.
[FIG. 3] FIG. 3 is a diagram for describing operations to update software in the communication apparatus 10.
[FIG. 4] FIG. 4 is a comparative example for the present invention, and is a diagram showing a structure of the LTE system 90 that manages a plurality of base stations by an EMS.

### [DESCRIPTION OF EMBODIMENTS]

Hereinafter, an exemplary embodiment of the present invention will be described with reference to the accompanying drawings. Meanwhile, in the description and drawings, overlapped explanation may be omitted by attaching a same sign to a component having an identical function.

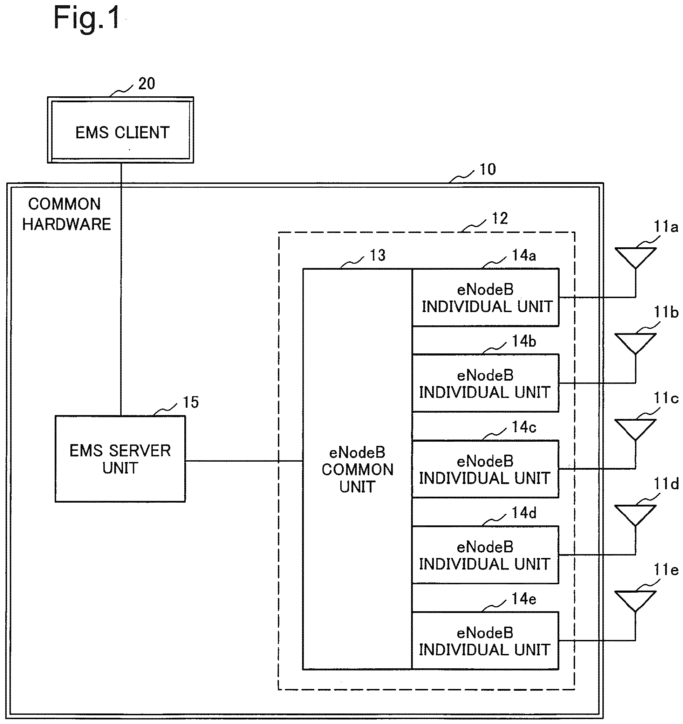

FIG. 1 is a block diagram showing a structure of the communication apparatus 10 according to one exemplary embodiment. The communication apparatus 10 has a plurality of antenna units 11a-11e, a base station unit 12 and an EMS server unit 15.

The antenna units 11a-11e are physical antennas, and communicate with mobile station apparatuses by operating according to directions from the base station unit 12.

The base station unit 12 functions as a plurality of virtual base stations which communicate with the mobile station apparatuses using each of antenna units 11. The base station unit 12 includes an eNodeB common unit 13 that is an example of a common base station unit which performs operations common to the plurality of the virtual base stations, and a plurality of eNodeB individual units 14a-14e which are examples of individual base station units which perform operations specific to each virtual base station. The eNodeB common unit 13 and eNodeB individual units 14 are realized virtually, and by the eNodeB common unit 13 and the eNodeB individual units 14 cooperating, the base station unit 12 functions as the plurality of virtual base stations which are logical base stations.

The EMS server unit 15 is a virtual management server unit which functions as a logical server to perform concentrated management of the plurality of virtual base stations. The EMS server unit 15 collects information which indicates states of the plurality of virtual base stations to monitor the states, and configures virtual base stations.

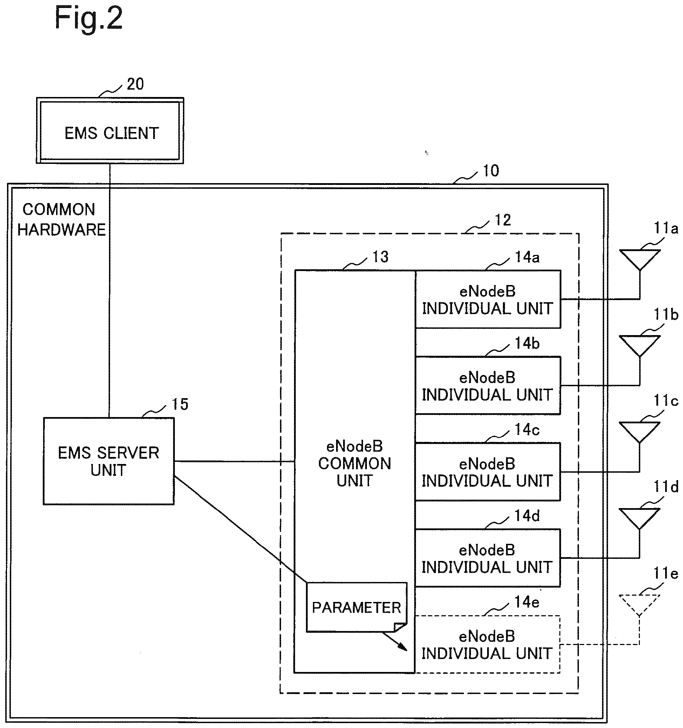

FIG. 2 is a diagram for describing operations to add a virtual base station in the communication apparatus 10. In the communication apparatus 10, the eNodeB individual units 14a-14d are being established corresponding to each of the antenna units 11a-11d. On the occasion of adding a new virtual base station to this communication apparatus 10, the EMS server unit 15 adds an eNodeB individual unit 14e virtually. The EMS server unit 15 sets a parameter which relates to the new virtual base station so that the added eNodeB individual unit 14e may function as a base station to communicate using the antenna units 11e. The EMS server unit 15 does not need to download software of the eNodeB common unit 13 newly at the time of adding a new virtual base station, and should simply set the parameter.

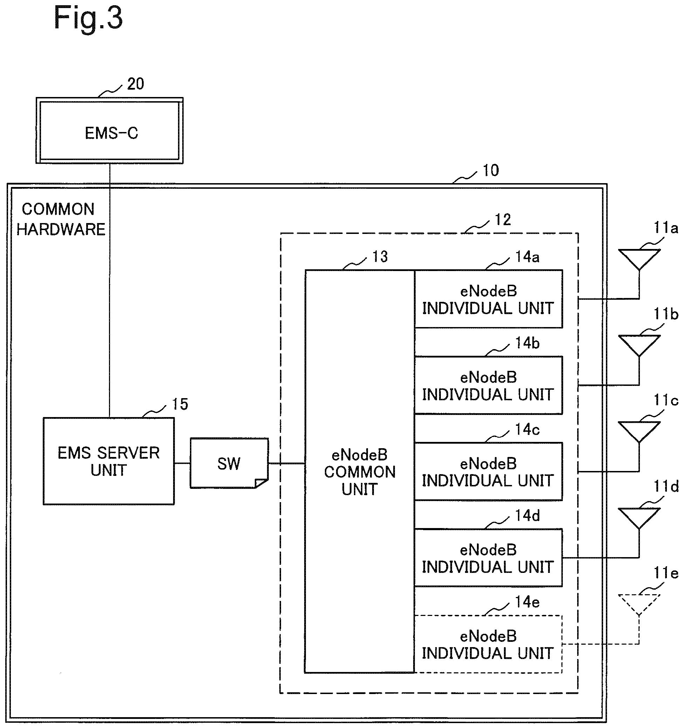

FIG. 3 is a diagram for describing operations to update software of a virtual base station in the communication apparatus 10. On the occasion of updating software of a virtual base station in the communication apparatus 10, the EMS server unit 15 does not need to download software to each virtual base station. The EMS server unit 15 should simply perform download only to the single eNodeB common unit 13 (FTP (FILE TRANSFER PROTOCOL) transfer in the identical hardware).

The EMS server unit 15 accepts notification of a state of each virtual base station, and records the accepted notification in a predetermined log file, or notifies an administrator of abnormality by e-mail, for example.

Meanwhile, the EMS server unit 15 is operated by remote control from an EMS client 20. An administrator of the communication apparatus 10 can add a new virtual base station to the communication apparatus 10 and observe a state of each virtual base station by operating the EMS client 20.

As it has been described above, according to the one exemplary embodiment of the present invention, the communication apparatus 10 has a plurality of antenna units 11a-11e, the base station unit 12 and the EMS server unit 15. The antenna units 11a-11e communicate with mobile station apparatuses, and the base station unit 12 functions as a plurality of virtual base stations which communicate with the mobile station apparatuses using each of the antenna units 11a-11e. The EMS server unit 15 functions as a logical server which manages a plurality of virtual base stations. As a result, a plurality of base stations and a server which manages the plurality of virtual base stations are constituted virtually in the same hardware, and, therefore, on the occasion of establishing a base station newly, the EMS server unit 15 only has to add a virtual base station. In addition, because, on the occasion of updating software for managing each base station, the EMS server unit 15 only has to transmit related data within the same hardware without involving a network, a time needed for new establishment of a base station and update of software can be reduced.

According to the above-mentioned exemplary embodiment, the base station unit 12 includes the eNodeB common unit 13 that is a common base station unit which performs operations common to a plurality of virtual base stations and a plurality of eNodeB individual units 14a-14e that are individual base station units which perform operations specific to each virtual base station. As a result, because the functions common to a plurality of virtual base stations are gathered together, on the occasion of updating software for managing each base station, the EMS server unit 15 should simply transmit the software to only the single eNodeB common unit 13, and a time needed for the new establishment of a base station and the update of the software can be reduced more certainly.

According to the above-mentioned exemplary embodiment, the eNodeB common unit 13 and the eNodeB individual units 14a-14e are realized virtually. On the occasion of adding a new virtual base station, the EMS server unit 15 adds the eNodeB individual unit 14e, and sets a parameter which relates to the virtual base station added newly. As a result, labor needed for adding a base station can be reduced.

### (Modifications)

Although the present invention has been described with reference to the exemplary embodiment above, the present invention is not limited to the above-mentioned exemplary embodiment. Various modifications which a person skilled in the art can understand can be performed in the composition and details of the present invention within the scope of the present invention.

For example, although, in the above-mentioned exemplary embodiment, it has been assumed that an eNodeB which is a base station used in a LTE system and an EMS server which is a control server managing base stations are operated virtually in the same hardware, the present invention is not limited to such example. For example, the technology of the present invention may be applied to a communication system besides the LTE system. For example, a 3G (3RD GENERATION) system and a 2G (2ND GENERATION) system are cited as a communication system besides a LTE system, and the technology of the present invention can be applied to a system including base stations besides the ones cited here and a server which manages such base stations.

Although, in the above-mentioned exemplary embodiment, a communication apparatus having five antenna units 11a-11e has been described, the present invention is not limited to this example. The technology of the present invention can be applied to a communication apparatus having an antenna unit of no smaller than 2. An antenna unit may be installed in a communication apparatus in advance, or it may be installed in a communication apparatus newly on the occasion of a virtual base station being added.

According to the above-mentioned exemplary embodiment, although the functions of the communication apparatus 10 has been described mainly, the present invention can be implemented as a method and a program for making a computer function as the communication apparatus 10, and a storage medium storing the program.

This application claims priority based on Japanese application Japanese Patent Application No. 2014-082691 filed on April 14, 2014, the disclosure of which is incorporated herein in its entirety by reference.

### [REFERENCE SIGNS LIST]

- 10: Communication apparatus
- 11a-11e: Antenna unit
- 12: Base station unit
- 13: eNodeB common unit (common base station unit)
- 14a-14e: eNodeB individual unit (individual base station unit)
- 15: EMS server unit (virtual management server unit)
- 20: EMS client

## Claims

1. A communication apparatus comprising:
a plurality of antenna units configured to communicate with a mobile station apparatus;
a base station unit configured to function as a plurality of virtual base stations configured to communicate with the mobile station apparatus using each of the antenna units; and
a virtual management server unit configured to function as a logical server configured to manage the plurality of virtual base stations.

2. The communication apparatus according to claim 1, wherein
the base station unit comprises:
a common base station unit configured to perform operations common to the plurality of virtual base stations; and
a plurality of individual base station units configured to perform operations specific to each of the virtual base stations.

3. The communication apparatus according to claim 2, wherein
the common base station unit and the individual base station units are realized virtually, and wherein
on the occasion of newly adding the virtual base station, the virtual management server unit adds the individual base station unit and sets a parameter which relates to the new virtual base station.

4. A communication method, comprising:
making a communication apparatus including a plurality of antenna units to communicate with a mobile station apparatus function as a plurality of virtual base stations configured to communicate with the mobile station apparatus using each of the antenna units; and
making the communication apparatus function as a logical server configured to manage the plurality of virtual base stations.

5. A storage medium storing a program that makes
a computer including a plurality of antenna units configured to communicate with a mobile station apparatus function as
a base station unit configured to function as a plurality of virtual base stations configured to communicate with the mobile station apparatus using each of the antenna units, and
a virtual management server unit configured to function as a logical server configured to manage the plurality of virtual base stations.
